# EUROPÄISCHE PATENTANMELDUNG

(11) **EP 0 993 980 A1**
(43) Veröffentlichungstag der Anmeldung: **19.04.2000**
(21) Anmeldenummer: 99119571.0
(22) Anmeldetag: 02.10.1999
(51) Int. Cl.: B60K 15/04, B60K 15/035

(54) **Verschlussstutzen für einen Einfüllstutzen eines Kraftstoffbehälters**

(30) Priorität: 15.10.1998 DE 19847472
(71) Anmelder: Mannesmann VDO Aktiengesellschaft, 60388 Frankfurt am Main (DE)
(72) Erfinder: Zapp, Thomas, Dr., 44265 Dortmund (DE); Reiter, Frank, 65812 Bad Soden (DE)
(74) Vertreter: Klein, Thomas, Dipl.-Ing.

(57) **Zusammenfassung**

Ein Verschlußstutzen (4) für einen Einfüllstutzen (1) eines Kraftfahrzeuges hat Austauschmittel zur Anpassung einer Betankungsentlüftung auf verschiedene Betankungseinrichtungen. Bei einer Gase aus einem Betankungskanal (23) absaugenden Betankungseinrichtung ist eine Ausgleichskammer (2) über einen Verbindungskanal (22) permanent mit dem Betankungskanal (23) verbunden. Zur Anpassung auf eine Betankungseinrichtung ohne Absaugung wird der Verbindungskanal (22) geschlossen und das Entlüftungsventil (5) mit einer einen Anschlußstutzen (18) für eine zu einem Aktivkohlefilter führenden Leitung aufweisenden Kappe (17) versehen. Hierdurch lassen sich Werkzeugkasten zur Herstellung des Verschlußstutzens (4) besonders gering halten.

## Beschreibung

Die Erfindung betrifft einen Verschlußstutzen für einen Einfüllstutzen eines Kraftstoffbehälters eines Kraftfahrzeuges mit einer in einem Betankungskanal angeordneten, beim Tanken bewegbaren Klappe zum Schalten eines Entlüftungsventils, mit einer ersten, an dem Entlüftungsventil angeschlossenen Ausgleichskammer für eine Betankungsentlüftung und mit einer zweiten, an dem Entlüftungsventil angeschlossenen Ausgleichskammer für eine Betriebsentlüftung, wobei das Entlüftungsventil während des Betriebs zur Verbindung der zweiten Ausgleichskammer mit dem Betankungskanal ausgebildet ist.

Solche Verschlußstutzen werden zur Verhinderung eines Entweichens von Kaftstoffdämpfen beim Tanken und zum Druckausgleich mit der Umgebung während des Betriebes häufig eingesetzt und sind aus der Praxis bekannt. Der Verschlußstutzen trägt an seinem dem Einfüllstutzen abgewandten Ende einen Verschlußdeckel des Kraftstoffbehälters. In der Betriebstellung hat die zweite Ausgleichskammer zum Überströmen von Luft in dem Entlüftungsventil eine Verbindung mit dem Betankungskanal. Beim Tanken wird die Klappe über einen Kipphebel geöffnet und verstellt das Entlüftungsventil in eine die zweite Ausgleichskammer verschließende Position. Beim Betanken wird in dem Kraftstoffbehälter befindliche Luft über die erste Ausgleichskammer abgeführt.

Für jeweilige Anforderungen an die Betankungsentlüftung bei der Verwendung von unterschiedlichen Betankungseinrichtungen ist es erforderlich, den Verschlußstutzen anzupassen. Beispielsweise ist es bei Betankungseinrichtungen, die Gase aus dem Betankungskanal absaugen, erforderlich, daß das Entlüftungsventil die erste Ausgleichskammer mit dem Betankungskanal verbindet. Bei Betankungseinrichtungen ohne Absaugung muß der erste Ausgleichsbehälter mit einem Aktivkohlefilter verbunden werden. Für die unterschiedlichen Betankungseinrichtungen sind verschiedene Verschlußstutzen bekannt geworden, die für ihre Herstellung jeweils eigene Werkzeugen benötigen. Dies führt insbesondere bei einer Serienfertigung zu einer sehr kostenintensiven Fertigung des Verschlußstutzens.

Der Erfindung liegt das Problem zugrunde, einen Verschlußstutzen der eingangs genannten Art so zu gestalten, daß er insbesondere in einer Serienfertigung besonders kostengünstig zu fertigen ist.

Dieses Problem wird erfindungsgemäß gelöst durch Austauschmittel zum wahlweisen Verbinden der ersten Ausgleichskammer mit einem Filter oder dem Betankungskanal.

Durch diese Gestaltung sind zur Anpassung des Verschlußstutzens an die jeweilige Betankungseinrichtung nur die Austauschmittel zu ersetzen. Hierdurch läßt sich der erfindungsgemäße Verschlußstutzen mit geringem baulichen Aufwand auf den vorgesehenen Anwendungsfall anpassen. Da der Verschlußstutzen für beide Anwendungsfälle abgesehen von den Austauschmitteln aus gleichen Bauteilen besteht, werden Kosten für eine Lagerhaltung und die Fertigung des erfindungsgemäßen Verschlußstutzens besonders gering gehalten.

Die Austauschmittel zum Verbinden der ersten Ausgleichskammer mit dem Filter gestalten sich gemäß einer vorteilhaften Weiterbildung der Erfindung besonders kostengünstig, wenn sie eine Kappe mit einem Anschlußstutzen für eine zu dem Filter führende Leitung aufweisen. Da das Entlüftungsventil in der Regel zur Montage eines im Inneren befindlichen Schließkörpers ohnehin eine Kappe benötigen, führt diese Gestaltung nicht zu einer Erhöhung der Anzahl der Bauteile des erfindungsgemäßen Verschlußstutzens.

Die Austauschmittel zum Verbinden der ersten Ausgleichskammer mit dem Betankungskanal erfordern einen besonders geringen baulichen Aufwand, wenn sie einen von einem Einsatz verschließbaren Verbindungskanal zwischen der ersten Ausgleichskammer und dem Betankungskanal haben. Bei einer Fertigung des Entlüftungsventils aus Kunststoff im Spritzgießverfahren läßt sich der Verbindungskanal einfach durch einen in die Spritzgußform einzulegenden Einsatz wahlweise freigeben oder verschließen.

Das Schließglied könnte beispielsweise über eine Hebelanordnung mit der Klappe verbunden sein. Der Verschlußstutzen läßt sich jedoch mit besonders geringem baulichen Aufwand für verschiedene Platzverhältnisse anpassen, wenn ein Schließglied des Entlüftungsventils gegen einen von der Klappe bewegbaren Exzenter vorgespannt ist. Hierdurch kann das Entlüftungsventil bei entsprechender Gestaltung des Exzenters in einem nahezu beliebigen Winkel zu der Klappe angeordnet sein.

Das Entlüftungsventil könnte Anschlußstutzen für mehrere zu den Ausgleichskammern geführte Leitungen haben. Dies würde zumindest vier Anschlüsse und damit einen hohen Montageaufwand für das Entlüftungsventil erfordern. Der erfindungsgemäße Verschlußstutzen läßt sich jedoch besonders einfach montieren, wenn das Entlüftungsventil einen gemeinsamen Flansch zum Anschluß an Flansche der beiden Ausgleichskammern und des Einfüllstutzens hat. Hierdurch sind zudem nur zwei Dichtstellen erforderlich, so daß eine Diffusion von Kraftstoffdämpfen aus dem Verschlußstutzen besonders gering gehalten wird.

Der Verbindungskanal ist zur Anpassung auf den jeweiligen Anwendungsfall des erfindungsgemäßen Verschlußstutzens besonders leicht zugänglich, wenn er in der Außenseite des Entlüftungsventils angeordnet und von einer Abdeckung verschließbar ist. Für den jeweiligen Anwendungsfall sind dank der Erfindung nur zwei verschiedene Abdeckungen erforderlich.

Der erfindungsgemäße Verschlußstutzen gestaltet sich besonders kostengünstig, wenn der Verbindungskanal als Vertiefung in dem Flansch gestaltet ist. Hierdurch werden zudem die Anzahl der von außerhalb des Verschlußstutzens zugänglichen Dichtstellen weiter verringert.

Der Verschlußstutzen läßt sich gemäß einer anderen vorteilhaften Weiterbildung der Erfindung zur Aufnahme sämtlicher Anschlüsse für den Kraftstoffbehälter gestalten, wenn er einen Anschluß für ein Roll-Over-Ventil hat. Hierdurch wird eine Montage des Kraftstoffbehälters in dem Kraftfahrzeug wesentlich vereinfacht.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Einfüllstutzen mit einem erfindungsgemäßen Verschlußstutzen und angrenzenden Bauteilen eines Kraftstoffbehälters,
- Fig.2: eine Ansicht von oben auf den erfindungsgemäßen Verschlußstutzen aus Figur 1,
- Fig.3: eine Schnittdarstellung durch den Verschlußstutzen aus Figur 2 entlang der Linie III - III bei einer Betriebsentlüftung,
- Fig.4: der Verschlußstutzen aus Figur 2 bei einer Betankungsentlüftung,
- Fig.5: den Verschlußstutzen aus Figur 4 nach einer Anpassung auf eine Betankungseinrichtung mit einer Absaugung,
- Fig.6: eine zweite Ausführungsform des erfindungsgegemäßen Verschlußstutzens.

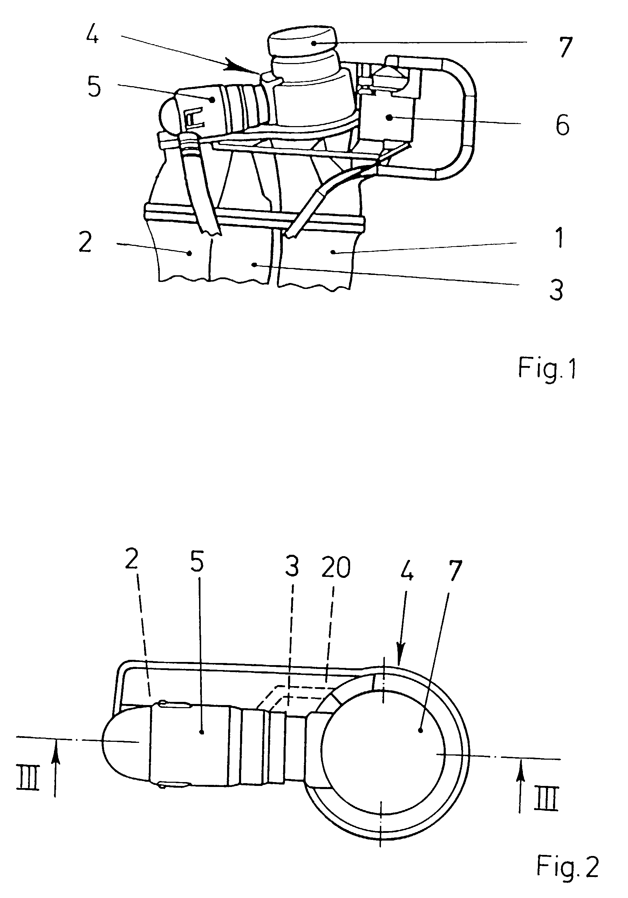

Die Figur 1 zeigt einen Einfüllstutzen 1 für einen Kraftstoffbehälter eines Kraftfahrzeuges mit zwei Ausgleichskammern 2, 3 und einem Verschlußstutzen 4. Der Verschlußstutzen 4 hat ein mit den beiden Ausgleichskammern 2, 3 verbundenes Entlüftungsventil 5. An dem Verschlußstutzen 4 ist weiterhin ein Roll-Over-Ventil 6 angeschlossen. Das Entlüftungsventil 5 und das Roll-Over-Ventil 6 sind jeweils an zu einem nicht dargestellten Aktivkohlefilter angeschlossen. An der Oberseite weist der Verschlußstutzen 4 einen Verschlußdeckel 7 auf.

In Figur 2 ist der Verschlußstutzen 4 aus Figur 1 in einer vergrößerten Ansicht von oben dargestellt. Hierbei ist zu erkennen, daß eine erste Ausgleichskammer 2 einen zu dem Verschlußstutzen 4 geführten Kanal 20 aufweist, während die zweite Ausgleichskammer 3 unmittelbar an den Verschlußstutzen 4 angrenzt.

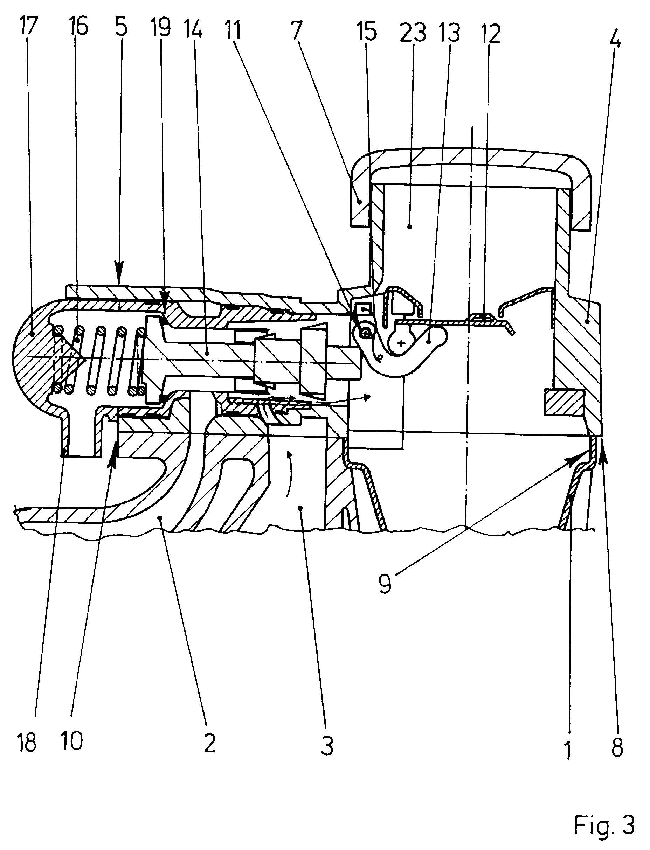

Figur 3 zeigt den Verschlußstutzen 4 aus Figur 2 in einer Schnittdarstellung entlang der Linie III - III. Der Verschlußstutzen 4 und der Einfüllstutzen 1 weisen einen gemeinsamen zentralen Betankungskanal 23 auf. Der Verschlußstutzen 4 hat einen Flansch 8 zur Anlage an Flansche 9, 10 der Ausgleichsbehälter 2, 3 und des Einfüllstutzens 1. In dem Betankungskanal 23 ist eine um eine senkrecht zur Zeichenebene angeordnete Achse 11 schwenkbare Klappe 12 angeordnet. Diese Klappe 12 dient zum Verschwenken eines an einem Schließglied 14 des Entlüftungsventils anliegenden Exzenters 13. Der Exzenter 13 ist von einer Schenkelfeder 15 gegen die Klappe 12 vorgespannt und hält diese in der eingezeichneten horizontalen Stellung. Auf der dem Exzenter 13 gegenüberliegenden Seite des Schließgliedes 14 befindet sich eine Feder 16. Die Feder 16 spannt das Schließglied 14 in die eingezeichnete Position vor. Diese Position kennzeichnet eine Betriebsentlüftung, in der Kraftstoffdämpfe aus der zweiten Ausgleichskammer 3 in den Betankungskanal 23 überströmen können. Zur Verdeutlichung sind die Strömungen der Kraftstoffdämpfe mit Pfeilen dargestellt. Selbstverständlich können die Kraftstoffdämpfe auch in der umgekehrten Richtung überströmen. Das Entlüftungsventil 5 hat eine Kappe 17 mit einem Anschlußstutzen 18, von dem eine nicht näher dargestellte Leitung zu dem Aktivkohlefilter führt. In der Betriebsentlüftung liegt das Schließglied 14 des Entlüftungsventils 5 an einem Ventilsitz 19 an und versperrt eine Verbindung des Anschlußstutzens 18 der Kappe 17 mit der ersten Ausgleichskammer 2.

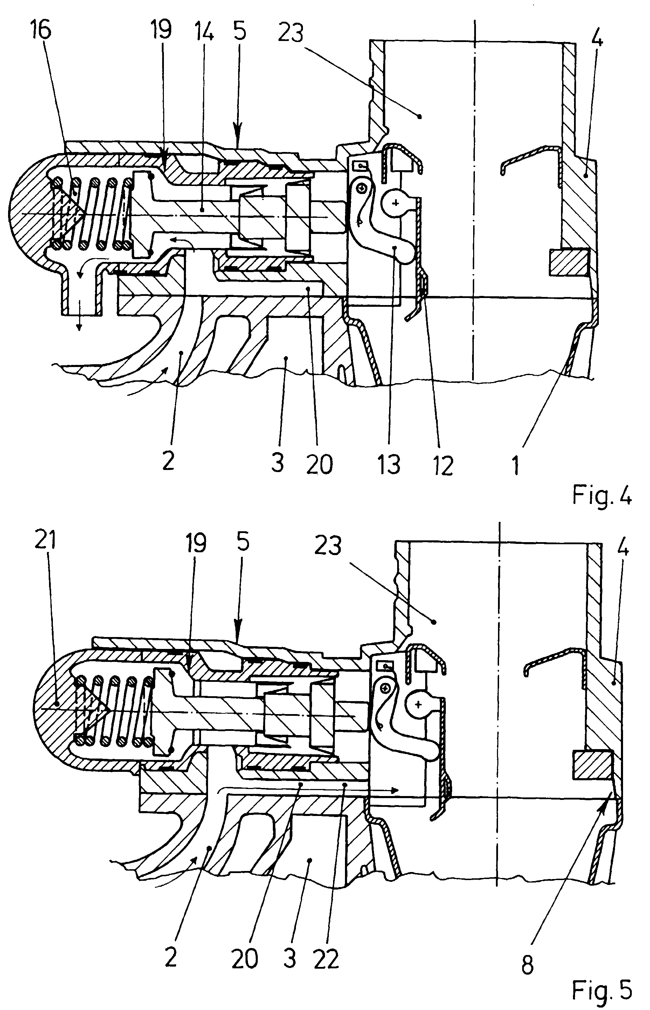

In Figur 4 ist ein Schnitt durch den Verschlußstutzen bei freigegebener Durchströmung des Betankungskanals 23 für eine nicht durch den Betankungskanal erfolgende Gasabsaugung dargestellt. Abweichend zu Figur 3 zeigt Figur 4 das Entlüftungsventil 5 in einem versetzten Schnitt durch den in Figur 2 dargestellten Kanal 20. Der Kanal 20 ist bis kurz vor den Betankungskanal 23 geführt. In diesem Bereich haben die Ausgleichskammern 2, 3 keine Verbindung mit dem Betankungskanal 23. Das Schließglied 14 ist hier entgegen der Kraft der Feder 16 nach links vorgespannt und befindet sich in einer von dem Ventilsitz 19 entfernten Stellung. Gleichzeitig versperrt das Schließglied 14 die Verbindung des Betankungskanals 23 zu der zweiten Ausgleichskammer 3. Hierdurch wird verhindert, daß Kraftstoff beim Betanken in die zweite Ausgleichskammer 3 und in den Betankungskanal 23 gelangt. Bei der Betankung des Kraftstoffbehälters können Gase aus der ersten Ausgleichskammer 2 über den Anschlußstutzen 18 der Kappe 17 zu dem Aktivkohlefilter abgeführt werden. Diese Gestaltung des Verschlußstutzens 4 eignet sich damit für Betankungseinrichtungen, bei denen während des Tankens keine Gase aus dem Betankungskanal 23 abgesaugt werden.

Die Figur 5 zeigt den Verschlußstutzen 4 aus Figur 4 nach einer Anpassung auf eine Betankungseinrichtung, bei der von dem einfließenden Kraftstoff verdrängte Gase aus dem Betankungskanal 23 abgesaugt werden. Hierbei hat das Entlüftungsventil 5 eine Kappe 21 ohne Anschlußstutzen. Weiterhin schließt sich an dem in Figur 4 dargestellten Kanal 20 ein bis in den Betankungskanal 23 geführter Verbindungskanal 22 an. Der Verbindungskanal 22 ist als Vertiefung in dem Flansch 8 gestaltet und läßt sich bei der Herstellung des Verschlußstutzens 4 aus Kunststoff einfach dadurch erzeugen, daß in eine Spritzgießform ein den Verbindungskanal 22 erzeugender Einsatz eingelegt wird.

Hierdurch ist die erste Ausgleichskammer 2 permanent mit dem Betankungskanal 23 verbunden. Die Betriebsentlüftung erfolgt hier wie in Figur 3 dargestellt.

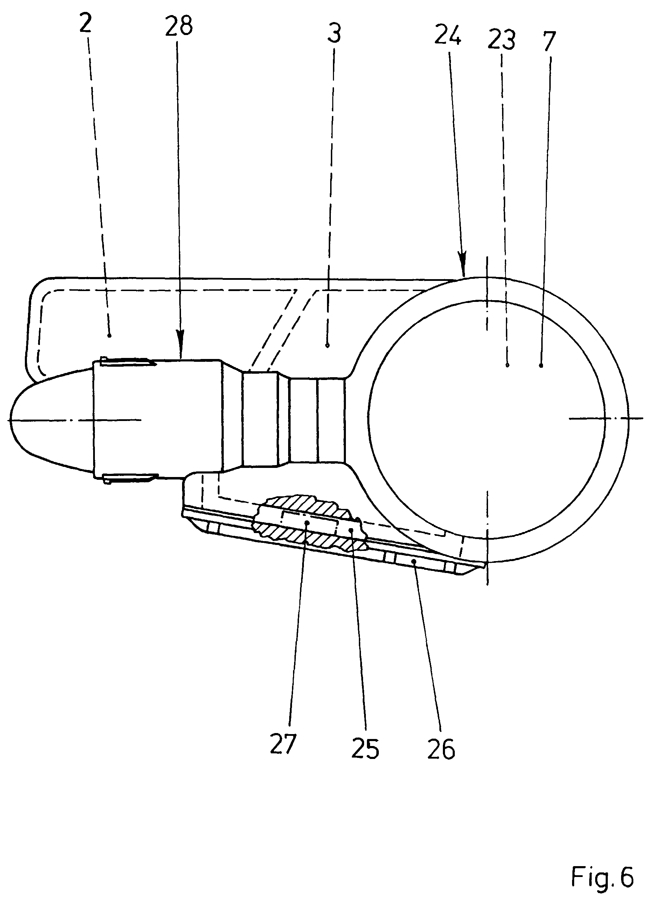

Die Figur 6 zeigt einen Verschlußstutzen 24, bei dem an einem Entlüftungsventil 28 ein von einer Abdeckung 26 verdeckter Verbindungskanal 25 angeordnet ist. Der Verbindungskanal 25 verbindet die erste Ausgleichskammer 2 mit dem Betankungskanal 23. Entsprechend dem vorgesehenen Anwendungsfall des Verschlußstutzens 4 kann der Verbindungskanal 25 von einem an der Abdeckung angeordneten Verschlußstopfen 27 verschlossen werden. Der Verschlußstopfen 27 ist in der Zeichnung strichpunktiert dargestellt.

## Patentansprüche

1. Verschlußstutzen für einen Einfüllstutzen eines Kraftstoffbehälters eines Kraftfahrzeuges mit einer in einem Betankungskanal angeordneten, beim Tanken bewegbaren Klappe zum Schalten eines Entlüftungsventils, mit einer ersten, an dem Entlüftungsventil angeschlossenen Ausgleichskammer für eine Betankungsentlüftung und mit einer zweiten, an dem Entlüftungsventil angeschlossenen Ausgleichskammer für eine Betriebsentlüftung, wobei das Entlüftungsventil während des Betriebs zur Verbindung der zweiten Ausgleichskammer mit dem Betankungskanal ausgebildet ist, **gekennzeichnet durch** Austauschmittel zum wahlweisen Verbinden der ersten Ausgleichskammer (2) über ein Umschaltventil mit einem Filter oder dem Betankungskanal (23).

2. Verschlußstutzen nach Anspruch 1, **dadurch gekennzeichnet**, daß die Austauschmittel zum Verbinden der ersten Ausgleichskammer (2) mit dem Filter eine Kappe (17) mit einem Anschlußstutzen (18) besitzt.

3. Verschlußstutzen nach Anspruch 1 oder 2, **dadurch gekennzeichnet**, daß die Austauschmittel zum Verbinden der ersten Ausgleichskammer (2) mit dem Betankungskanal (23) einen von einem Einsatz (Verschlußstopfen 27) verschließbaren Verbindungskanal (22, 25) zwischen der ersten Ausgleichskammer (2) und dem Betankungskanal (23) haben.

4. Verschlußstutzen nach zumindest einem der vorhergehenden Ansprüche, **dadurch gekennzeichnet**, daß ein Schließglied (14) des Entlüftungsventils (5) gegen einen von der Klappe (12) bewegbaren Exzenter (13) vorgespannt ist.

5. Verschlußstutzen nach zumindest einem der vorhergehenden Ansprüche, **dadurch gekennzeichnet**, daß der Verbindungskanal (25) in der Außenseite des Entlüftungsventils (28) angeordnet und von einer Abdeckung (26) verschließbar ist.

6. Verschlußstutzen nach zumindest einem der vorhergehenden Ansprüche, **dadurch gekennzeichnet**, daß der Verbindungskanal (22) als Vertiefung in dem Flansch (8) gestaltet ist.

7. Verschlußstutzen nach zumindest einem der vorhergehenden Ansprüche, **dadurch gekennzeichnet**, daß er einen Anschluß für ein Roll-Over-Ventil (6) hat.
